# EUROPÄISCHE PATENTSCHRIFT

(11) **EP 2 664 898 B1**
(45) Veröffentlichungstag und Bekanntmachung des Hinweises auf die Patenterteilung: **02.07.2014**
(21) Anmeldenummer: 12168056.5
(22) Anmeldetag: 15.05.2012
(51) Int. Cl.: G01D 5/34

(54) **Sende- und Empfangseinheit und Drehgeber mit einer solchen**
Transmission and receiver unit and rotary encoder with such
Unité d'émission et réception et encodeur en étant équipé

(43) Veröffentlichungstag der Anmeldung: 20.11.2013
(73) Patentinhaber: SICK STEGMANN GmbH, 78166 Donaueschingen (DE)
(72) Erfinder: Hopp, David, 78166 Donaueschingen (DE); Mutschler, Reinhold, 78056 Villingen-Schwenningen (DE); Basler, Stefan, 78086 Brigachtal (DE)
(74) Vertreter: Ludewigt, Christoph

(56) Entgegenhaltungen:
- EP-A1- 2 187 178
- DE-U1- 20 102 192

## Beschreibung

Die Erfindung betrifft eine Sende- und Empfangseinheit für die Erfassung eines Drehwinkels sowie einen damit arbeitenden Drehgeber.

Zur Erfassung eines Drehwinkels z. B. einer Welle werden u. a. optische Wirkprinzipien eingesetzt. Unabhängig vom jeweiligen optischen Prinzip bestehen entsprechende Sensoren aus mindestens einer Lichtquelle, einer Maßverkörperung und einem Empfänger. Die Maßverkörperung erzeugt über eine Relativbewegung zum Empfänger eine Intensitätsmodulation des Signals auf dem Empfänger, welche als Winkelsignal dient. Zwei grundlegende Aufbauvarianten finden Verwendung: Transmittiv und Reflektiv. Insbesondere die reflektive Auslegung, bei der der Strahlengang an der Maßverkörperung reflektiert wird, hat besondere Vorteile, da nämlich dann Sender und Empfänger auf der gleichen Seite angeordnet werden können, beispielsweise auf der gleichen Elektronikkarte. Damit ist eine echte Entkopplung von Drehgeber und drehender Welle möglich. Der Drehgeber muss die Welle lediglich nur noch "sehen".

Die Auslegung eines reflektiven Strahlengangs stellt je nach optischem Funktionsprinzip eine Herausforderung dar, da die einzelnen Komponenten, vor allem Sender und Empfänger, nicht direkt entlang einer optischen Achse ausgerichtet werden können. Für die meisten optischen Funktionsprinzipien bietet sich jedoch eine mittige Ausrichtung aller Komponenten vor allem aus Symmetriegründen an.

Das Bestreben beim Aufbau reflektiver optischer Funktionsprinzipien für Drehwinkelsensoren ist es, die Beleuchtung, die Maßverkörperung sowie den Empfänger zentrisch auf eine optische Achse zu bringen. Dies erfordert die zentrale Platzierung der Lichtquelle. Eine zentrale Platzierung der Lichtquelle wiederum erfordert eine Platzierung des Empfängers außerhalb der optischen Achse. Eine Symmetrie ergibt sich nur dann, wenn mehrere Empfänger um die Lichtquelle herum positioniert werden oder wenn das Licht umgelenkt wird. Dafür werden jedoch Strahlteiler, Spiegelsysteme o. Ä. benötigt, welche justiert werden müssen. In solchen Systemen sind die einzelnen Komponenten in verschiedenen Aufbauebenen angeordnet. Die Positionierung bzw. die Justage der optischen Komponenten in einem System mit mehreren Aufbauebenen ist aufwändig und kostenintensiv. Ebenso ist eine Umlenkung des Beleuchtungsstrahlengangs kompliziert und meist mit erheblichem Intensitätsverlust behaftet. Darüber hinaus benötigt ein solcher Aufbau erheblichen Bauraum.

Davon ausgehend ist es Aufgabe der Erfindung, ein neues Aufbaukonzept zur Positionierung der Lichtquelle und des Empfängers vorzustellen, mit dem die vorgenannten Nachteile vermieden werden können.

Diese Aufgabe wird gelöst durch eine Sende- und Empfangseinheit mit den Merkmalen des Anspruchs 1 und einen Drehgeber für die Erfassung eines Drehwinkels mit den Merkmalen des Anspruchs 10.

Die erfindungsgemäße Sende- und Empfangseinheit ist zur Erfassung eines Drehwinkels vorgesehen und weist einen Lichtsender, ein Lichtempfänger und einen dazwischen angeordneten transparenten Träger auf, der auf dem Lichtempfänger flächig aufliegt und diesen abdeckt. Der Lichtsender ist auf dem Träger aufgebracht und strahlt in eine Richtung von dem Lichtempfänger weg ab. Der Lichtsender ist derart mittig über dem Lichtempfänger angeordnet, dass Empfangslicht an dem Lichtsender vorbei auf den Lichtempfänger fallen kann.

Ein wesentlicher Vorteil der Erfindung ist der so mögliche symmetrische Aufbau, so dass Lichtsender und Lichtempfänger im Wesentlichen kollinear angeordnet sind, so dass ein kompakter Aufbau gewährleistet ist, ohne dass mehrere Aufbauebenen notwendig sind. Es werden dafür nur wenige Komponenten benötigt. Lichtsender und Lichtempfänger sind zu einer einfach zu handhabenden Einheit integriert. Dabei ist die Größe des Lichtempfängers so groß, dass das Empfangslicht an dem Lichtsender vorbei noch auf die optische Empfangsfläche des Lichtempfängers fällt.

Die erfindungsgemäße Sende- und Empfangseinheit mit dem Empfänger bzw. Empfängerchip und dem integrierten Lichtsender ist als Optikmodul flexibel einsetzbar und für unterschiedlichste optische Funktionsprinzipien geeignet. Eine störende direkte Beleuchtung des Empfängers durch den Lichtsender ist praktisch ausgeschlossen.

Durch die reflektierende Wirkung des transparenten Trägers bei schrägem Lichteinfall wird seitlich einfallendes Streulicht, das z. B. vom Drehgebergehäuse stammen könnte, wirkungsvoll unterdrückt. Mit einer geeigneten Form der Oberfläche des transparenten Trägers lassen sich störende Interferenzeffekte durch Reflektion innerhalb des Trägers eliminieren.

Durch die Abdeckung des Empfängers mittels des transparenten Trägers ist die photoempfindliche Fläche vor Umwelteinflüssen, wie z. B. Staub oder auch vor unmittelbaren mechanischen Beschädigungen geschützt.

Die optische Empfangsfläche des Lichtempfängers ist größer als die geometrischen Abmessungen des Lichtsenders. Dann kann ohne eine besondere Empfangsoptik das Empfangslicht vom Empfänger an dem Lichtsender vorbei empfangen werden.

Vorteilhafterweise besteht der transparente Träger aus Glas.

Der Lichtsender ist auf den Träger geklebt und damit in einfacher Weise fest mit dem Träger und dem Empfänger zu einer integrierten Einheit verbunden.

Mit Vorteil ist der Lichtsender als eine LED, ein LED-Chip, eine Laserdiode oder ein Laserchip ausgebildet.

In einer Ausführungsform können weitere Lichtsender auf dem Träger angeordnet sein, wenn es die Anwendung erfordert.

In Weiterbildung der Erfindung besitzt der Träger gezielt geformte Oberflächen, so dass er auch eine Linsenfunktion übernehmen kann und damit weitere separate optische Komponenten für das Empfangslicht eingespart werden können.

Gleiches gilt, wenn der Träger als optisches Filter zur Wellenlängenselektion ausgebildet ist und/oder diffraktive Strukturen zur Beugung, Umlenkung oder Dispersion des Lichts aufweist und/oder zusätzlich eine Polarisation des Lichts bewirkt.

Mit einer geeigneten Form der Oberfläche oder der Strukturierung des transparenten Trägers lässt sich das Licht in Abhängigkeit der Dicke des Trägers bis in die Mitte des Empfängers auf die optische Achse ablenken, so dass auch die eigentlich von dem Lichtsender abgeschattete Empfangsfläche des Empfängers voll genutzt werden kann.

Vorteilhafterweise wird die erfindungsgemäße Sende- und Empfangseinheit in einem Drehgeber zur Messung des Drehwinkels zweier relativ zueinander rotierender Objekte eingesetzt.

Besonders vorteilhaft ist die Erfindung einsetzbar in Drehwinkelsensoren, die nach dem polarisationsoptischen Prinzip den Drehwinkel bestimmen und bei denen der Strahlengang reflektiv ausgelegt ist. Dazu weist der Drehgeber einen Polarisator auf, der sich relativ zur Lichtquelle dreht und eine Maßverkörperung bildet. An dem Polarisator wird das Sendelicht reflektiert wird und tritt durch einen polarisierenden Analysator. Der Empfänger weist wenigstens zwei Empfangselemente auf, vorzugsweise ist der Empfänger als Lichtempfängerarray ausgebildet, die zueinander einen Drehwinkelabstand haben. Durch Auswertung der so erhaltenen Signale auf den beiden Empfangselementen kann inkremental ein Drehwinkel und eine Drehrichtung bestimmt werden.

Um eine Eindeutigkeit über 360° zu erzielen, kann der Polarisator als Scheibe mit einer Normalen ausgebildet sein, wobei die Normale mit der Drehachse einen von Null verschiedenen Winkel bildet.

Im Folgenden wird die Erfindung anhand eines Ausführungsbeispiels unter Bezugnahme auf die Zeichnung im Einzelnen erläutert. In der Zeichnung zeigen:

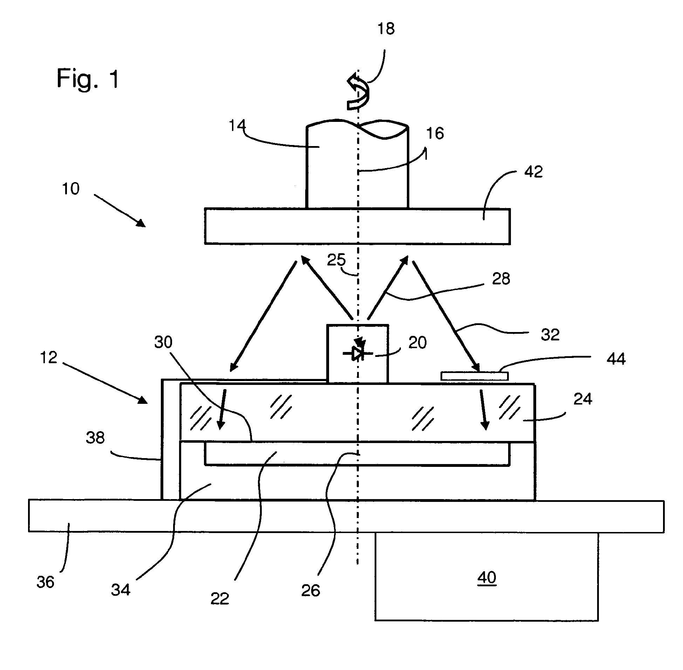

- Fig. 1: eine schematische Darstellung eines erfindungsgemäßen Drehgebers mit einer erfindungsgemäßen Sende- und Empfangseinheit;
- Fig. 2: eine andere Ausführungsform des Drehgebers nach Fig. 1;
- Fig. 3: einen Drehgeber nach Fig. 1 mit einer anderen Ausführungsform der Sende- und Empfangseinheit.

Ein erfindungsgemäßer Drehgeber 10 umfasst eine erfindungsgemäße Sende- und Empfangseinheit 12 für die Erfassung eines Drehwinkels einer Welle 14, die sich um eine Drehachse 16 in Pfeilrichtung 18 dreht. Der Drehgeber 10 ist drehfest angeordnet und kann die Drehung der Welle in diesem Ausführungsbeispiel nach dem polarisationsoptischen Prinzip bestimmen.

Die Sende- und Empfangseinheit 12 weist einen Lichtsender 20, einen Lichtempfänger 22 und einen dazwischen angeordneten transparenten Träger 24 auf. Lichtsender 20 und Lichtempfänger 22 sind symmetrisch angeordnet, was in diesem Ausführungsbeispiel bedeutet, dass sie symmetrisch zur Drehachse 16 liegen und ihre jeweiligen optischen Achsen 25 und 26 mit der Drehachse 16 zusammenfallen.

Das muss nicht in jedem Anwendungsfall der Fall sein. Wichtig ist, dass der Lichtsender 20 in eine Richtung 28 abstrahlt, die von dem Lichtempfänger 22 weg zeigt, wobei der Lichtsender 20 derart mittig über dem Lichtempfänger 22 angeordnet ist, dass Empfangslicht 32 an dem Lichtsender 20 vorbei auf den Lichtempfänger 22 fallen kann.

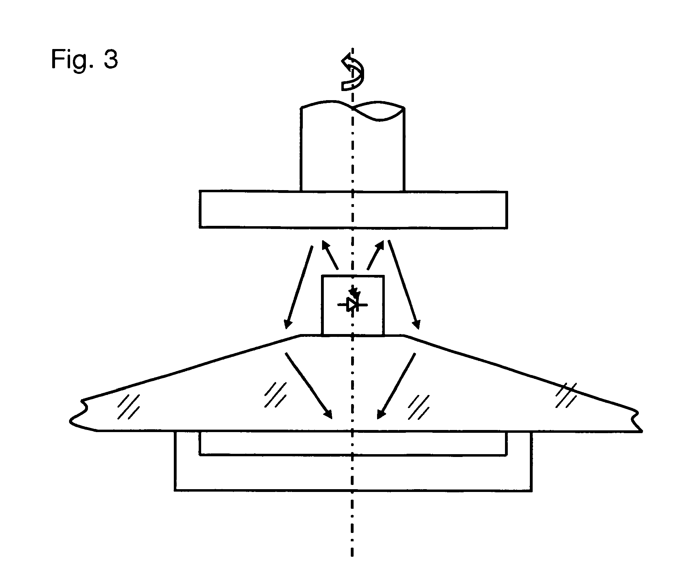

Damit das Empfangslicht 32 auf den Lichtempfänger 22 fällt ist entweder die optische Empfangsfläche 30 des Lichtempfängers 22 größer als die geometrischen Abmessungen des Lichtsenders 20 oder es muss eine Empfangsoptik vorgesehen sein, die das Empfangslicht derart umlenkt, dass es an dem Lichtsender 20 vorbei auf den Lichtempfänger fällt. Selbstverständlich kann auch beides erfüllt sein, also eine genügend große Lichtempfangsfläche plus eine Umlenkung des Empfangslichts auf den abgeschatteten Teil des Lichtempfängers, wie dies weiter unten anhand der Fig. 3 erläutert wird.

Die Sende- und Empfangseinheit 12 mit integriertem Lichtsender 20, transparentem Träger 24 und Lichtempfänger 22 ist wie folgt aufgebaut. Auf einem Trägersubstrat 34, das selbst auf einer Elektronikkarte 36 angeordnet ist, ist der eigentliche Lichtempfänger 22 angeordnet. Dieser ist vorzugsweise als Lichtempfängerarray mit mehreren Empfangselementen in CCD- oder CMOS-Bauweise ausgebildet. Der Lichtempfänger 22 wiederum ist durch den transparenten und vorzugsweise aus Glas bestehenden Träger 25 flächig abgedeckt, der sich seitlich bis zum Rand des Trägersubstrats 34 oder auch darüber hinaus erstrecken kann. Mittig auf dem Träger 24 sitzt der Lichtsender 20, der dort festgelegt, beispielsweise festgeklebt, ist. Zuleitungen 38 zum Lichtsender 20 führen von der Elektronikkarte 36 zum Lichtsender 20.

Die Elektronikkarte 36 kann weitere elektronische Komponenten 40 z. B. zur Ansteuerung des Lichtsenders 20 und/oder Auswertung der Signale des Lichtempfängers 22 und/oder Verarbeitung der Signale und Ausgabe von Ausgangssignalen, z. B. in Form von Winkelwerten, aufweisen.

Der Lichtsender 20 kann eine LED, ein LED-Chip, eine Laserdiode oder ein Laserchip sein. Weiter können theoretisch mehrere Lichtsender 20 auf dem Träger 24 angeordnet sein.

Der wesentliche Vorteil und besondere Sinn und Zweck der erfindungsgemäßen Sende- und Empfangseinheit 12 wird deutlich bei Betrachtung des damit ausgerüsteten, erfindungsgemäßen Drehgebers 10. Als Beispiel wird die Funktionsweise eines Drehgebers beschrieben, der nach dem Prinzip der Polarisation, also durch Detektion einer Polarisationsrichtung, den Drehwinkel bestimmt.

Das Licht 28 des Lichtsenders, das im Falle einer LED unpolarisiert ist, wird in einen Sendekegel abgestrahlt und trifft auf einen sich mit der Welle 14 drehenden Linearpolarisator 42. Das von dem Polarisator 42 reflektierte Licht 32 weist dann eine lineare Polarisation auf, deren Richtung dem aktuellen Drehwinkel der Welle 14 entspricht. Das reflektierte Licht durchtritt einen Analysator 44, der nichts anderes ist als ein Linearpolarisator, und wird von dem unterhalb des Analysators 44 gelegenen Empfangselementen detektiert. Die Intensität des dort gemessenen Lichts hat dann eine sin²-Abhängigkeit. Eine analoge Messung wird an anderer Stelle des Lichtempfängers, die aber einen Drehwinkelabstand zur ersten Stelle aufweist, mit gleichem oder einem anderen Analysator gemacht. Diese Messung an dem zweiten Ort liefert ein zweites sin²-Signal. Beide sin²-Signale zusammen liefern in bekannter Weise einerseits einen Drehwinkel und andererseits eine Drehrichtung.

Prinzipiell ist eine solche Erfassung des Drehwinkels zweier relativ zueinander um eine Drehachse rotierender Objekte mit Hilfe der Polarisationseigenschaften des Lichts bekannt. Beispiele für derartige Vorrichtungen zeigen die DE 100 05 277 A1, DE 201 02 192 U1, EP 2 187 78 A1, EP 1 507 137 A1 oder US 7,777,879. Aufgrund der physikalischen Eigenschaften der Polarisation weisen die drehwinkelabhängigen Signale wenigstens zwei Perioden pro Umdrehung um 360° auf und können deshalb nicht ohne Weiteres absolut bestimmt werden. Es fehlt eine Information, die eine Eindeutigkeit über 360° liefern würde.

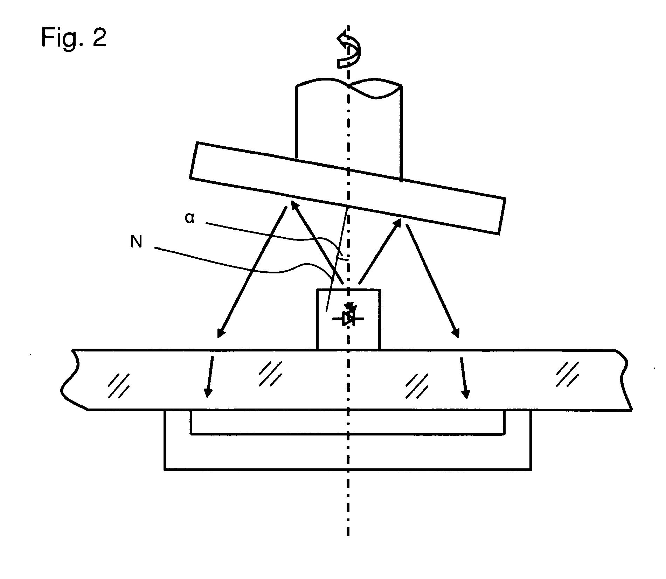

Um eine solche Information bereitzustellen, ist in einer in Fig. 2 dargestellten Weiterbildung der Erfindung vorgesehen, dass der Polarisator 42 als Scheibe mit einer Normalen N ausgebildet ist. Die Normale N schließt mit der Drehachse 16 einen von Null verschiedenen Winkel α ein, ist also schiefgestellt. Dadurch wird den gemessenen Signalen eine weitere Intensitätsmodulation, die über 360° periodisch ist, aufgeprägt, wodurch die fehlende Information zur Erlangung der Eindeutigkeit bereitgestellt ist.

Nach den bisher beschriebenen Ausführungsformen ist der Träger 24 als planparallele Platte ausgeführt. In Fig. 3 ist eine weitere alternative Ausführungsform dargestellt, in der Träger nicht planparallel ist, sondern jetzt gezielt geformte Oberflächen besitzt und so z. B. eine Linsenfunktion erfüllt oder das Licht zur optischen Achse hin bricht, so dass beispielsweise der eigentlich abgeschattete Teil der Empfangsfläche 30 direkt unterhalb des Lichtsenders 20 dennoch Licht empfangen kann.

Für eine Beeinflussung der empfangenen Lichtstrahlen 32 bieten sich sphärische Linsenformen, asphärische Linseformen, Fresnellinsenformen, Kegelstumpfformen (Fig. 3) aber auch Freiformflächen an. Des Weiteren könnte der transparente Träger 24 mit diffraktiven Strukturen versehen werden, so dass eine Beugung, Umlenkung, Dispersion etc. des Lichts implementiert werden kann. Ebenso können Polarisationseigenschaften, wie sie in obigem Beispiel des Drehgebers für die Analysatorfunktion benötigt werden, direkt in dem Träger integriert sein. Auch können Farbfilterfunktionen, z. B. zur Reduzierung von Umgebungslicht oder zum Vorsehen eines optischen Bandpassfilters, im transparenten Träger 24 direkt vorgesehen sein.

Der Träger 24 könnte auch aus anderem Material als Glas hergestellt sein. Prinzipiell müssen Lichtquelle und Empfänger nicht unbedingt mittig auf der optischen Achse platziert sein.

## Patentansprüche

1. Sende- und Empfangseinheit für die Erfassung eines Drehwinkels mit einem Lichtsender (20), einem Lichtempfänger (22) und einem dazwischen angeordneten transparenten Träger (24), der auf dem Lichtempfänger (22) flächig aufliegt und diesen abdeckt, wobei diese Komponenten zu einer integrierten Einheit fest verbunden sind (4/1-3) und ein Optikmodul bilden (3/11-13), wobei der Lichtsender (20) auf den Träger (24) geklebt ist und in eine Richtung (28) von dem Lichtempfänger (22) weg abstrahlt, wobei der Lichtsender (20) derart mittig über dem Lichtempfänger (22) angeordnet ist, dass Empfangslicht (32) an dem Lichtsender (20) vorbei auf den Lichtempfänger (22) fallen kann, wobei die optische Empfangsfläche (30) des Lichtempfängers (22) größer ist als die geometrischen Abmessungen des Lichtsenders (20).

2. Sende- und Empfangseinheit nach einem der vorhergehenden Ansprüche, **dadurch gekennzeichnet, dass** der transparente Träger aus Glas besteht.

3. Sende- und Empfangseinheit nach einem der vorhergehenden Ansprüche, **dadurch gekennzeichnet, dass** der Lichtsender eine LED, ein LED-Chip, eine Laserdiode oder ein Laserchip ist.

4. Sende- und Empfangseinheit nach einem der vorhergehenden Ansprüche, **dadurch gekennzeichnet, dass** weitere Lichtsender auf dem Träger angeordnet sind.

5. Sende- und Empfangseinheit nach einem der vorhergehenden Ansprüche, **dadurch gekennzeichnet, dass** der Träger gezielt geformte Oberflächen besitzt und so eine Linsenfunktion erfüllt.

6. Sende- und Empfangseinheit nach einem der vorhergehenden Ansprüche, **dadurch gekennzeichnet, dass** der Träger ein optisches Filter mit Wellenlängenselektion umfasst.

7. Sende- und Empfangseinheit nach einem der vorhergehenden Ansprüche, **dadurch gekennzeichnet, dass** der Träger diffraktive Strukturen aufweist zur Beugung, Umlenkung oder Dispersion des Lichts.

8. Sende- und Empfangseinheit nach einem der vorhergehenden Ansprüche, **dadurch gekennzeichnet, dass** der Träger eine Polarisation des Lichts bewirkt.

9. Sende- und Empfangseinheit nach einem der vorhergehenden Ansprüche, **dadurch gekennzeichnet, dass** der Lichtempfänger als Empfängerarray als CCD oder in CMOS Bauweise ausgebildet ist.

10. Drehgeber mit einer Sende- und Empfangseinheit nach einem der vorhergehenden Ansprüche.

11. Drehgeber zur Messung des Drehwinkels zweier relativ zueinander rotierender Objekte nach Anspruch 10, **dadurch gekennzeichnet, dass** dieser als Polarisationsencoder (10) ausgebildet ist mit einem Polarisator (42), der sich relativ zur Lichtquelle (20) dreht und an dem das Sendelicht (28) reflektiert wird, und dass der Empfänger (22) wenigstens zwei Empfangselemente aufweist, denen wenigstens ein polarisierender Analysator (44) vorgeordnet ist, wobei die beiden Empfangselemente einen Drehwinkelabstand zueinander haben.

12. Drehgeber nach Anspruch 11, **dadurch gekennzeichnet, dass** der Polarisator als Scheibe mit einer Normalen ausgebildet ist und die Normale mit der Drehachse einen von Null verschiedenen Winkel bildet.

## Claims

1. Transmitting and receiving unit for detecting a rotation angle having a light transmitter (20), a light receiver (22) and a transparent support ( 24) arranged therebetween, which lies flat on the light receiver (22) and covers it, whereby these components are fixedly connected to build an integrated unit (4/1-3) and constitute an optical module (3/11-13), said light transmitter (20) is glued to the support (24) and radiates away from the light receiver (22) in a direction (28), wherein the light transmitter (20) is arranged centrally above the light receiver (22) in that receiving light (32) falls on the light receiver (22) in bypassing the light transmitter (20), whereby the optical receiving surface (30) of the light receiver (22 ) is greater than the geometric dimensions of the light emitter (20).

2. Transmitting and receiving unit according to one of the preceding claims, **characterized in that** the transparent support is made of glass.

3. Transmitting and receiving unit according to one of the preceding claims, **characterized in that** the light transmitter is an LED, an LED chip, a laser diode or a laser chip.

4. Transmitting and receiving unit according to one of the preceding claims, **characterized in that** further light emitter are arranged on the support.

5. Transmitting and receiving unit according to one of the preceding claims, **characterized in that** the support has a desired shaped surface and fulfills a lens function.

6. Transmitting and receiving unit according to one of the preceding claims, **characterized in that** the support comprises an optical filter having wavelength selection.

7. Transmitting and receiving unit according to one of the preceding claims, **characterized in that** the carrier has diffractive structures for the diffraction, deflection or dispersion of light.

8. Transmitting and receiving unit according to one of the preceding claims, **characterized in that** the support causes a polarization of the light.

9. Transmitting and receiving unit according to one of the preceding claims, **characterized in that** the light receiver is embodied as a receiver array of a CCD- or CMOS-type.

10. Rotary encoder with a transmitting and receiving unit according to any one of the preceding claims.

11. Rotary encoder for measuring the angle of rotation between two relatively rotating objects according to claim 10 , **characterized in that** it is embodied as a polarization encoder (10) with a polarizer (42) which rotates relative to the light source (20) and at which the transmitted light (28) is reflected, and **in that** the receiver (22) has at least two receiving elements, in front of which at least a polarizing analyzer (44) is arranged whereby the two receiving elements are arranged relative to one another by an angle of rotation.

12. Rotary encoder according to claim 11, **characterized in that** the polarizer is embodied as a disc with a normal axis and the normal axis and the rotation axis form an angle which is different from zero.

## Revendications

1. Unité émettrice/réceptrice pour la détection d'un angle de rotation comprenant un émetteur de lumière (20), un récepteur de lumière (22) et un support transparent (24) agencé entre ceux-ci, qui repose à plat sur le récepteur de lumière (22) et recouvre celui-ci, dans laquelle ces composants sont fermement reliés en une unité intégrée (4/1-3) et forment un module optique (3/11-13), dans laquelle l'émetteur de lumière (20) est collé sur le support (24) et rayonne dans une direction (28) en éloignement du récepteur de lumière (22), dans laquelle l'émetteur de lumière (20) est agencé au milieu au-dessus du récepteur de lumière (22) de telle façon que la lumière reçue (32) peut tomber sur le récepteur de lumière (22) en passant à côté de l'émetteur de lumière (20), et la surface de réception optique (30) du récepteur de lumière (22) est plus grande que les dimensions géométriques de l'émetteur de lumière (20).

2. Unité émettrice/réceptrice selon la revendication précédente, **caractérisée en ce que** le support transparent est en verre.

3. Unité émettrice/réceptrice selon l'une des revendications précédentes, **caractérisée en ce que** l'émetteur de lumière est une diode électroluminescente, une puce à diode électroluminescente, une diode laser ou une puce à laser.

4. Unité émettrice/réceptrice selon l'une des revendications précédentes, **caractérisée en ce que** d'autres émetteurs de lumière sont agencés sur le support.

5. Unité émettrice/réceptrice selon l'une des revendications précédentes, **caractérisée en ce que** le support possède des surfaces formées de manière ciblée et remplit ainsi une fonction de lentille.

6. Unité émettrice/réceptrice selon l'une des revendications précédentes, **caractérisée en ce que** le support inclut un filtre optique avec sélection de longueur d'onde.

7. Unité émettrice/réceptrice selon l'une des revendications précédentes, **caractérisée en ce que** le support comporte des structures de diffraction pour la diffraction, la déflexion ou la dispersion de la lumière.

8. Unité émettrice/réceptrice selon l'une des revendications précédentes, **caractérisée en ce que** le support provoque une polarisation de la lumière.

9. Unité émettrice/réceptrice selon l'une des revendications précédentes, **caractérisée en ce que** le récepteur de lumière est réalisé sous la forme d'un réseau récepteur avec des CCD, ou avec des composants CMOS.

10. Capteur rotatif avec une unité émettrice/réceptrice selon l'une des revendications précédentes.

11. Capteur rotatif pour mesurer l'angle de rotation de deux objets en rotation relative l'un par rapport à l'autre, selon la revendication 10, **caractérisé en ce que** celui-ci est réalisé comme un codeur à polarisation (10) avec un polariseur (42) qui tourne par rapport à la source de lumière (20) et sur lequel la lumière émise (28) est réfléchie, et **en ce que** le récepteur (22) comprend au moins deux éléments récepteurs avec au moins un analyseur polariseur (40) agencé devant eux, et les deux éléments récepteurs présentent un écart angulaire l'un par rapport à l'autre.

12. Capteur rotatif selon la revendication 11, **caractérisé en ce que** le polariseur est réalisé sous forme de disque avec une normale, et la normale forme avec l'axe de rotation un angle différent de zéro.
